# EUROPEAN PATENT APPLICATION

(11) **EP 4 494 809 A1**
(43) Date of publication of application: **22.01.2025**
(21) Application number: 23770122.2
(22) Date of filing: 25.01.2023
(51) Int. Cl.: B23Q 3/155, B23Q 17/00, G05B 19/18

(54) **MACHINE TOOL**

(30) Priority: 16.03.2022 JP 2022041558
(71) Applicant: Citizen Watch Co., Ltd., Nishitokyo-shi, Tokyo 188-8511 (JP); Citizen Machinery Co., Ltd., Nagano 389-0206 (JP)
(72) Inventor: KOTAKE, Kyota, Kitasaku-gun, Nagano 389-0206 (JP); NAITOH, Yoshihiko, Kitasaku-gun, Nagano 389-0206 (JP)
(74) Representative: Ricker, Mathias
(86) International application number: PCT/JP2023/002239
(87) International publication number: WO 2023/176160

(57) **Abstract**

A machine tool includes a current detector that detects a plurality of current values inputted into a first servo motor and a second servo motor, a storage that stores normal time-varying changes in current values inputted into the first servo motor and the second servo motor in a predetermined step among a series of tool exchanging steps performed between a rotary tool device and an automatic tool changer, and a determination unit that determines whether the predetermined step is performed normally by comparing the plurality of current values detected by the current detector in the predetermined step with the normal time-varying changes in current values.

## Description

### FIELD

The present disclosure relates to a machine tool.

### BACKGROUND

A machine tool including a rotary tool device that rotatably holds a tool for machining a workpiece and an automatic tool changer (ATC) that exchanges tools with the rotary tool device is generally known. A machine tool determines whether an abnormality, such as a breakdown of the device and a collision, has occurred in a series of tool exchanging steps performed between a rotary tool device and an ATC, using, for example, a method described in Japanese Unexamined Patent Publication JP06-246568A, and stops operating at an abnormal occurrence.

In the method described in JP06-246568A, the current value of a motor is monitored during tool exchanging operation, and a machine tool is stopped operating when the current value of this motor exceeds an allowable value. However, multiple motors are used in a series of tool exchanging steps, and in some cases, an abnormal condition of a machine tool can be detected by monitoring current values inputted into these motors.

### SUMMARY

An object of the present disclosure is to provide a machine tool capable of detecting an abnormality that occurs internally by monitoring current values inputted into motors.

A machine tool according to an embodiment of the present disclosure includes a rotary tool device and an automatic tool changer that exchanges tools with the rotary tool device. The rotary tool device includes (i) a rotary tool body that holds the tool rotatably to machine a workpiece, and (ii) a first servo motor that generates motive power for operating the rotary tool device. The automatic tool changer includes a second servo motor that generates motive power for operating the automatic tool changer. The machine tool includes a current detector that detects a plurality of current values inputted into the first servo motor and the second servo motor, a storage that stores normal time-varying changes in current values inputted into the first servo motor and the second servo motor in a predetermined step among a series of tool exchanging steps performed between the rotary tool device and the automatic tool changer, and a determination unit that determines whether the predetermined step is performed normally by comparing the plurality of current values detected by the current detector in the predetermined step with the normal time-varying changes in current values.

In the machine tool according to an embodiment of the present disclosure, the automatic tool changer preferably further includes a housing and a round magazine that is housed in the housing and that has tool holders arranged circumferentially, the tool holders holding the tools.

Preferably, in the machine tool according to an embodiment of the present disclosure, the first servo motor generates motive power for operating a vertical-direction moving mechanism that enables the rotary tool body to move along the vertical direction, the second servo motor generates motive power for operating a magazine rotating mechanism that enables the magazine to rotate about a rotating shaft, and the predetermined step is a step in which the tools are moved to a predetermined position where the tools are exchanged between the rotary tool device and the automatic tool changer or a step in which the rotary tool device and the automatic tool changer are moved from the predetermined position to original positions where the rotary tool device and the automatic tool changer are located before starting the series of tool exchanging steps.

Preferably, in the machine tool according to an embodiment of the present disclosure, the magazine includes a hook for holding a tool, and the determination unit determines whether the hook is broken, based on a current value inputted into the second servo motor detected by the current detector.

Preferably, in the machine tool according to an embodiment of the present disclosure, the rotary tool device includes a third servo motor that generates motive power for operating a first horizontal-direction moving mechanism that enables the rotary tool body to move along the horizontal direction; the current detector detects a current value inputted into the third servo motor; and when the current value detected by the current detector does not vary in a second predetermined step among the series of tool exchanging steps performed between the rotary tool device and the automatic tool changer, the determination unit determines that the second predetermined step is not performed normally.

Preferably, in the machine tool according to an embodiment of the present disclosure, the automatic tool changer includes a fourth servo motor that generates motive power for operating a second horizontal-direction moving mechanism that enables the housing to move along the horizontal direction; the current detector detects a current value inputted into the fourth servo motor; and when the current value detected by the current detector does not vary in a second predetermined step among the series of tool exchanging steps performed between the rotary tool device and the automatic tool changer, the determination unit determines that the second predetermined step is not performed normally.

In the machine tool according to an embodiment of the present disclosure, the second predetermined step is preferably a step in which the tool is transferred from the rotary tool device to the automatic tool changer or a step in which the tool is transferred from the automatic tool changer to the rotary tool device.

The machine tool according to an embodiment of the present disclosure can detect an abnormality that occurs internally by monitoring current values inputted into motors.

### BRIEF DESCRIPTION OF DRAWINGS

FIG. 1 is a partial perspective view of a machine tool according to the embodiment;
FIG. 2 is a block diagram showing the configuration of the machine tool shown in FIG. 1;
FIG. 3 is an enlarged perspective view of an automatic tool changer shown in FIGs. 1 and 2;
FIG. 4A is a front view of a magazine viewed from a viewpoint β shown in FIG. 3;
FIG. 4B is a diagram for explaining a step in which a tool is held on the magazine shown in FIG. 4A (part 1);
FIG. 4C is a diagram for explaining a step in which a tool is held on the magazine shown in FIG. 4A (part 2);
FIG. 5 is a flowchart showing a series of tool exchanging steps performed between a B-axis rotary tool device and the automatic tool changer of the machine tool according to the embodiment;
FIG. 6A shows positions to which the B-axis rotary tool device and the ATC move in one of the tool exchanging steps (part 1);
FIG. 6B shows positions to which the B-axis rotary tool device and the ATC move in one of the tool exchanging steps (part 2);
FIG. 6C shows positions to which the B-axis rotary tool device and the ATC move in one of the tool exchanging steps (part 3);
FIG. 6D shows positions to which the B-axis rotary tool device and the ATC move in one of the tool exchanging steps (part 4);
FIG. 6E shows positions to which the B-axis rotary tool device and the ATC move in one of the tool exchanging steps (part 5);
FIG. 6F shows positions to which the B-axis rotary tool device and the ATC move in one of the tool exchanging steps (part 6);
FIG. 7 shows normal waveforms of currents supplied to servo motors in the series of tool exchanging steps shown in FIG. 5;
FIG. 8 shows the waveforms of currents supplied to the servo motors in a predetermined tool exchanging step for the case where tool unclamping is abnormal;
FIG. 9 shows the waveforms of currents supplied to the servo motors in a predetermined tool exchanging step for the case where next-tool clamping is abnormal; and
FIG. 10 shows the waveforms of currents supplied to the servo motors in predetermined tool exchanging steps for the case where the magazine is broken.

### DESCRIPTION OF EMBODIMENTS

A machine tool according to the present embodiment will now be described with reference to the attached drawings. However, note that the technical scope of the present disclosure is not limited to embodiments thereof and covers the invention described in the claims and equivalents thereof.

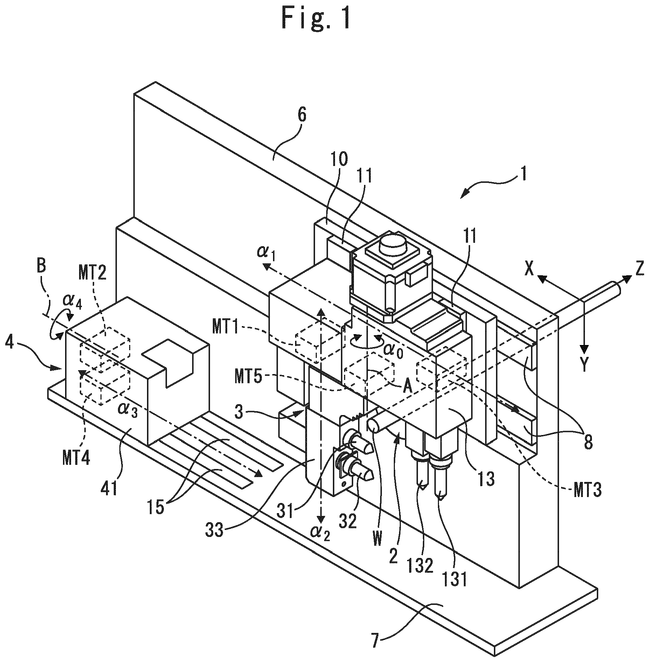

FIG. 1 is a partial perspective view of a machine tool 1 according to the present embodiment. The machine tool 1 shown in FIG. 1 is a device for machining a workpiece W that is a long round bar. The machine tool 1 includes a main spindle 2 for supporting the workpiece W, a rotary tool driver 13 including a B-axis rotary tool device 3, an automatic tool changer (ATC) 4, and a numerically controlled (NC) device 5 which will be described below.

The main spindle 2 is provided on a support 6. The main spindle 2, whose axis is in the Z-axis direction, supports the workpiece W rotatably about the Z-axis, and can move the workpiece W toward the front side of the support 6. The support 6 is fixed and supported by a bed 7.

On the front side of the support 6 are installed rails 8 extending along the X-axis direction (also referred to as the horizontal direction) perpendicular to the Z-axis direction. On the rails 8 is mounted a base 10 that slides in the direction of arrow α₁ by motive power generated by a third servo motor MT3. On the base 10 are installed rails 1₁ extending along the Y-axis direction (also referred to as the vertical direction) perpendicular to the Z-axis and X-axis directions. On the rails 11 is mounted the rotary tool driver 13 that slides in the direction of arrow α₂ by motive power generated by a first servo motor MT1.

The rotary tool driver 13 holds tools for machining the workpiece W. The rotary tool driver 13 includes tools 131 and 132 as well as the B-axis rotary tool device 3 including a first tool 31 and a second tool 32. The tools 131 and 132 are installed side by side along the X-axis direction with their tips facing downward. The first tool 31 and the second tool 32 are rotatably held by a B-axis rotary tool body 33 constituting the B-axis rotary tool device 3, and are installed side by side along the Y-axis direction with their tips facing sideward. The machine tool 1 according to the present embodiment can machine the workpiece W with a predetermined tool by moving the workpiece W in the Z-axis direction with the main spindle 2 and moving the rotary tool driver 13 in the direction of arrow α₁ or α₂. The B-axis rotary tool body 33 is supported so as to be capable of turning in the direction of arrow α₀ around a pivot A of a turning motor MT5 by motive power generated by the turning motor MT5.

The ATC 4 is a device that exchanges tools with the B-axis rotary tool device 3. The ATC 4 includes a housing 41, a fourth servo motor MT4, a round magazine 42 held in the housing 41, which will be described below, and a second servo motor MT2. On the bed 7 are installed rails 15 extending along the X-axis direction. The housing 41 is mounted on the rails 15, and slides in the direction of arrow α₃ by motive power generated by the fourth servo motor MT4. The magazine 42 is supported rotatably in the direction of arrow α₄ about a rotating shaft B by motive power generated by the second servo motor MT2.

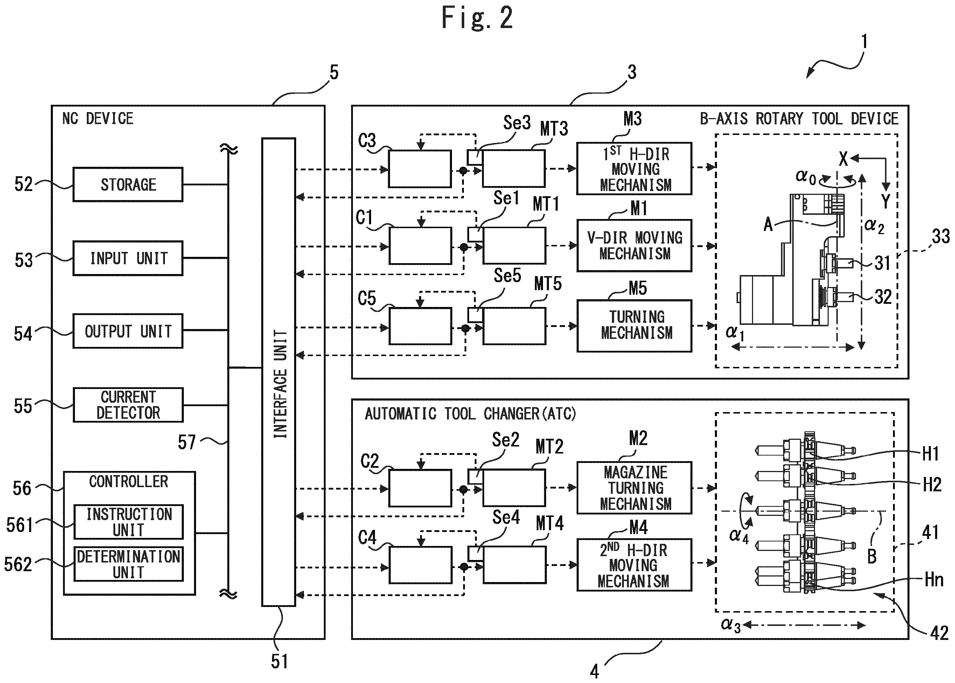

FIG. 2 is a block diagram showing the internal configuration of the machine tool 1 shown in FIG. 1. As shown in FIG. 2, the B-axis rotary tool device 3 includes the B-axis rotary tool body 33, a first horizontal-direction moving mechanism M3, the third servo motor MT3, a vertical-direction moving mechanism M1, the first servo motor MT1, a turning mechanism M5, and the turning motor MT5.

The first horizontal-direction moving mechanism M3 enables the whole rotary tool driver 13 including the B-axis rotary tool body 33 to move in the direction of arrow α₁. The third servo motor MT3 converts an inputted current into mechanical output (motive power such as torque and rpm), and gives the output to the first horizontal-direction moving mechanism M3. In this way, the first horizontal-direction moving mechanism M3 moves the B-axis rotary tool body 33 forward and backward in the direction of arrow α₁. Operation of the third servo motor MT3 is controlled by a motion controller C3.

The motion controller C3 inputs a predetermined current into the third servo motor MT3, depending on a control signal transmitted from the NC device 5 described below. A control signal transmitted to the motion controller C3 includes at least the amount of rotation (radian or the number of steps) and the number of revolutions (rpm) of the third servo motor MT3. The third servo motor MT3 is provided with a sensor Se3, which detects the actual amount of rotation and the actual number of revolutions of the third servo motor MT3 and transmits them to the motion controller C3. The motion controller C3 compares the values of the amount of rotation and the number of revolutions of the third servo motor MT3 included in a control signal with the values of the actual amount of rotation and the actual number of revolutions of the third servo motor MT3 detected by the sensor Se3, and inputs a predetermined current into the third servo motor MT3 so as to reduce the differences between these values to zero. Since the methods of controlling motion controllers C1, C2, C4, and C5 are similar to that of controlling the motion controller C3, a detailed description thereof is omitted.

The vertical-direction moving mechanism M1 enables the whole rotary tool driver 13 including the B-axis rotary tool body 33 to move upward and downward in the direction of arrow α₂. The first servo motor MT1 generates motive power for operating the vertical-direction moving mechanism M1. Operation of the first servo motor MT1 is controlled by the motion controller C1. Since the method of the motion controller C1 controlling the first servo motor MT1 is similar to that of the motion controller C3 controlling the third servo motor MT3, a detailed description thereof is omitted.

The turning mechanism M5 enables the B-axis rotary tool body 33 to turn in the direction of arrow α₀ around the pivot A of the turning motor MT5. The turning motor MT5 generates motive power for operating the turning mechanism M5. Operation of the turning motor MT5 is controlled by the motion controller C5. Since the method of the motion controller C5 controlling the turning motor MT5 is similar to that of the motion controller C3 controlling the third servo motor MT3, a detailed description thereof is omitted.

As shown in FIG. 2, the ATC 4 includes the round magazine 42, a second horizontal-direction moving mechanism M4, the fourth servo motor MT4, a magazine rotating mechanism M2, and the second servo motor MT2.

The second horizontal-direction moving mechanism M4 enables the housing 41 housing the magazine 42 to move in the direction of arrow α₃. The fourth servo motor MT4 generates motive power for operating the second horizontal-direction moving mechanism M4. The fourth servo motor MT4 converts an inputted current into mechanical output (motive power such as torque and rpm), and gives the output to the second horizontal-direction moving mechanism M4. In this way, the second horizontal-direction moving mechanism M4 moves the housing 41 housing the magazine 42 forward and backward in the direction of arrow α₃. Operation of the fourth servo motor MT4 is controlled by the motion controller C4. Since the method of the motion controller C4 controlling the fourth servo motor MT4 is similar to that of the motion controller C3 controlling the third servo motor MT3, a detailed description thereof is omitted.

The magazine rotating mechanism M2 enables the magazine 42 to rotate in the direction of arrow α₄ about the rotating shaft B. The second servo motor MT2 generates motive power for operating the magazine rotating mechanism M2. The second servo motor MT2 converts an inputted current into mechanical output (motive power such as torque and rpm), and gives the output to the magazine rotating mechanism M2. In this way, the magazine rotating mechanism M2 rotates the magazine 42 in the direction of arrow α₄ about the rotating shaft B. Operation of the second servo motor MT2 is controlled by the motion controller C2. Since the method of the motion controller C2 controlling the second servo motor MT2 is similar to that of the motion controller C3 controlling the third servo motor MT3, a detailed description thereof is omitted.

The NC device 5 controls operation of the B-axis rotary tool device 3 and the ATC 4. As shown in FIG. 2, the NC device 5 includes an interface unit 51, a storage 52, an input unit 53, an output unit 54, a current detector 55, and a control unit 56. The interface unit 51, the storage 52, the input unit 53, the output unit 54, the current detector 55, and the control unit 56 are connected to each other via a bus 57. Various control signals from the control unit 56 are transmitted to the motion controllers C1 to C5 via the interface unit 51. Current values outputted from the motion controllers C1 to C5 to the corresponding servo motors MT1 to MT5 are transmitted to the current detector 55 via the interface unit 51.

The storage 52 includes, for example, a semiconductor memory, and stores programs and data used for processing by the control unit 56. The storage 52 stores at least a program executed by the control unit 56 to cause a series of tool exchanging steps to be performed between the B-axis rotary tool device 3 and the ATC 4. The program may be installed on the storage 52 from a computer-readable portable storage medium, such as a CD-ROM, with a known set-up program. The storage 52 prestores time-varying changes in current values inputted into the servo motors MT1 to MT4 for the case where a series of tool exchanging steps is performed normally.

The input unit 53 may be any device that enables input of data, and generates a signal corresponding to operation by an operator of the machine tool 1. The generated signal is supplied to the control unit 56 as the operator's instruction.

The output unit 54 may be any device that can display video and images, and displays video and images depending on video data or image data supplied from the control unit 56.

The current detector 55 detects current values inputted into the servo motors MT1 to MT4, and transmits the results of detection to the control unit 56.

The control unit 56 centrally controls the entire operation of the machine tool 1, and is, for example, a central processing unit (CPU). The control unit 56 causes a series of tool exchanging steps to be performed, in accordance with a program stored in the storage 52. The control unit 56 includes an instruction unit 561 and a determination unit 562. The instruction unit 561 transmits, for example, control signals for a series of tool exchanging steps to be performed to the motion controllers C1 to C5 via the interface unit 51. The control signals include the amounts of rotation (radians or the numbers of steps) and the numbers of revolutions (rpm) of the servo motors. The determination unit 562 determines whether the series of tool exchanging steps is performed normally. Details of the determination procedure will be described below.

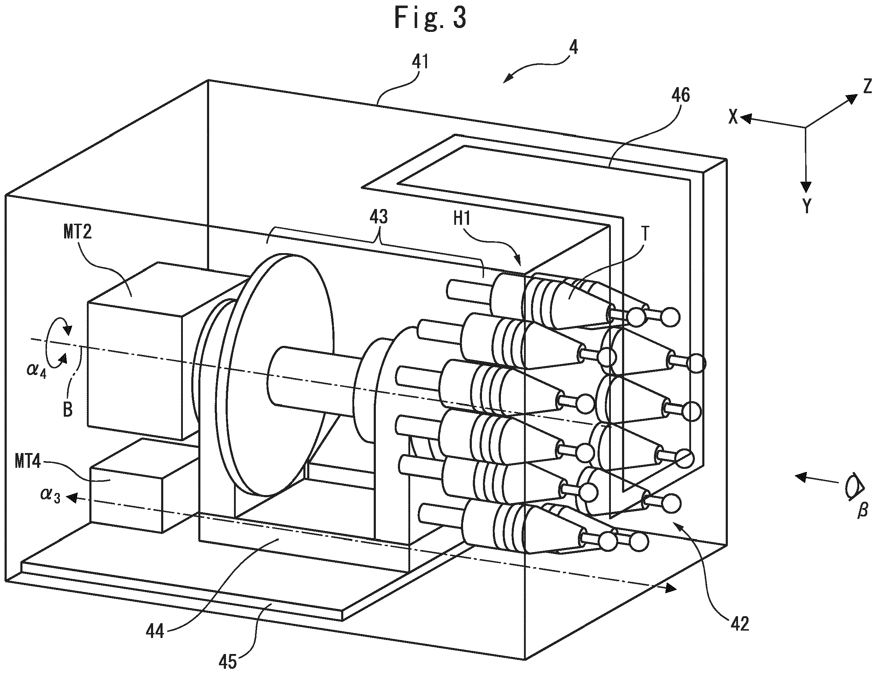

FIG. 3 is an enlarged perspective view of the ATC 4 shown in FIGs. 1 and 2. As shown in FIG. 3, the magazine 42 is housed in the housing 41 of the ATC 4, and one end of a rotating shaft 43 that constitutes the magazine rotating mechanism M2 is fixed to and supported at the center of the magazine 42. The rotating shaft 43 is rotatably supported by a support member 44 installed on a base 45. The magazine 42 rotates in the direction of arrow α₄ by motive power generated by the second servo motor MT2. In the housing 41 is also disposed a shutter 46 that is opened and closed by an opening and closing mechanism (not shown) to take a tool in and out of the ATC 4 for the purpose of exchange.

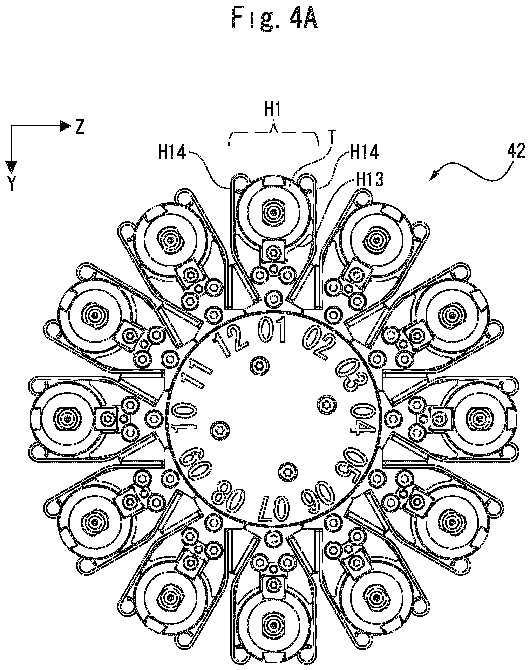

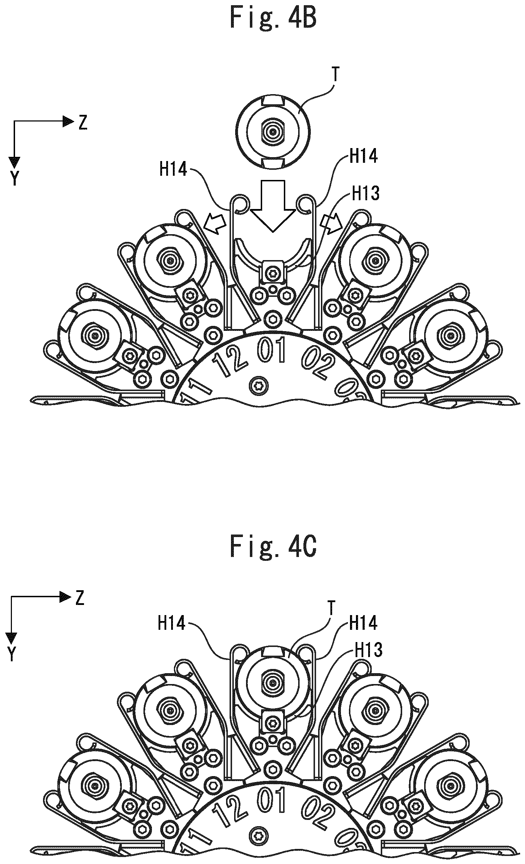

FIG. 4A is a front view of the magazine 42 viewed from a viewpoint β shown in FIG. 3. As shown in FIG. 4A, the magazine 42 has twelve tool holders H1 to H12, each holding a tool, arranged circumferentially. Since the tool holders H1 to H12 have the same configuration, the following describes only the tool holder H1 for convenience of description. The single tool holder H1 includes a recess H13 for housing a tool T, and two hooks H14 each including an elastic member for grasping a tool T housed in the recess H13. For example, a tool T is lowered along the Y-axis direction to be housed in the recess H13, as shown in FIG. 4B, and is elastically held by the hooks H14 in the recess H13, as shown in FIG. 4C.

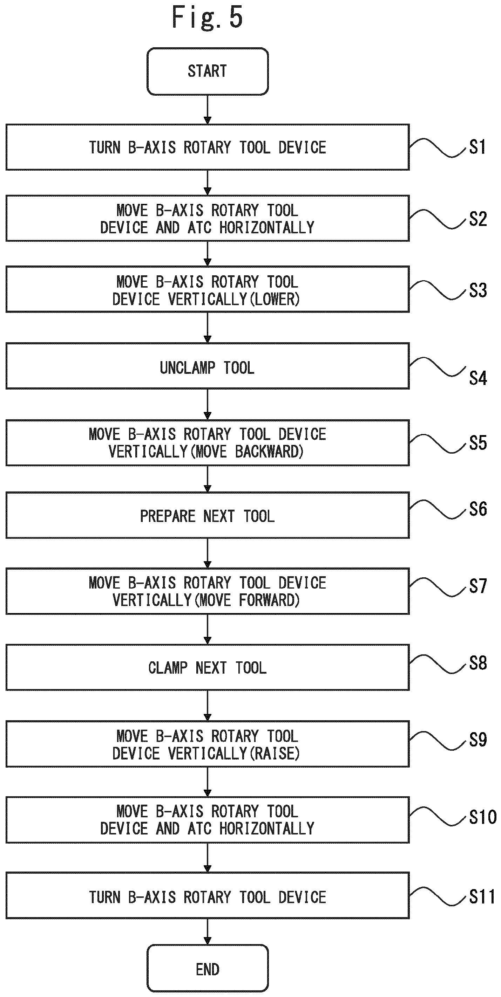

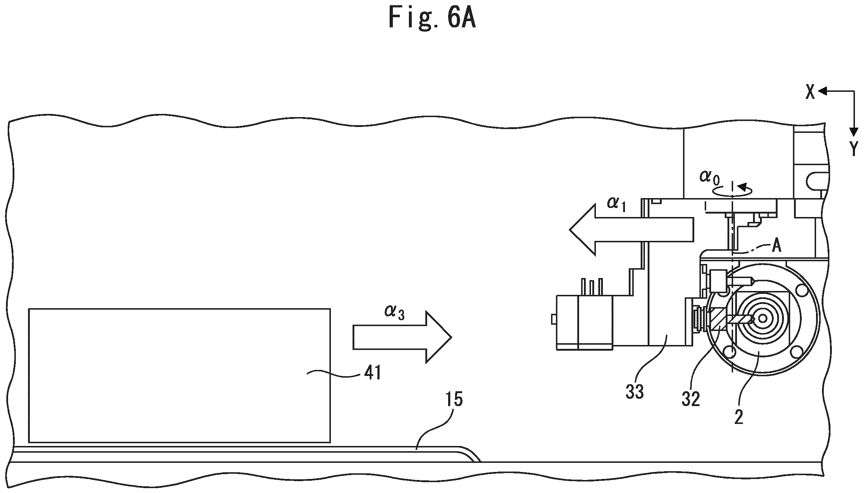

FIG. 5 is a flowchart showing a series of tool exchanging steps performed between the B-axis rotary tool device 3 and the ATC 4 of the machine tool 1 according to the present embodiment. FIGs. 6A to 6F show positions to which the B-axis rotary tool device 3 and the ATC 4 move in the series of tool exchanging steps. The following describes normal operation for the case where the second tool 32 held by the B-axis rotary tool body 33 is replaced with another tool.

When an instruction to change tools is inputted by a predetermined procedure, the control unit 56 first turns the B-axis rotary tool device in accordance with a program stored in the storage 52 (step S1). More specifically, the instruction unit 561 of the control unit 56 transmits a predetermined control signal including the amounts of rotation (radians or the numbers of steps) and the numbers of revolutions (rpm) of the servo motors to the motion controller C3 via the interface unit 51. The motion controller C3 controls the third servo motor MT3, depending on the control signal transmitted from the instruction unit 561, to drive the first horizontal-direction moving mechanism M3, thereby moving the B-axis rotary tool device 3 to move the B-axis rotary tool body 33 along the rails 8 in the direction of arrow α₁ shown in FIG. 6A (forward direction). In the following, a description of the movement mechanisms M1 to M5 and the B-axis rotary tool device 3 will be omitted for the sake of convenience. A description of the instruction unit 561 transmitting control signals to the motion controllers C1 to C5 and the motion controllers C1 to C5 controlling the servo motors MT1 to MT4 and the turning motor MT5 with the control signals will also be omitted.

Next, the instruction unit 561 controls the turning motor MT5 to turn the B-axis rotary tool body 33 by 180 degrees in the direction of arrow α₀ shown in FIG. 6A around the pivot A of the turning motor MT5.

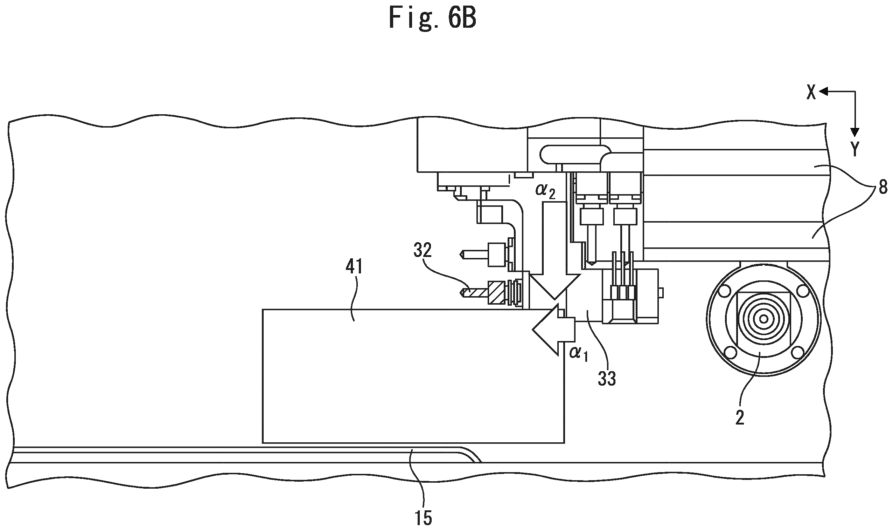

Next, the control unit 56 moves the B-axis rotary tool device 3 and the ATC 4 horizontally (step S2). More specifically, as shown in FIG. 6A, the instruction unit 561 of the control unit 56 controls the third servo motor MT3 to move the B-axis rotary tool body 33 in the direction of arrow α₁ (forward direction). Simultaneously, the instruction unit 561 of the control unit 56 controls the fourth servo motor MT4 to move the housing 41 in the direction of arrow α₃ (forward direction). At this time, the shutter 46 of the housing 41 is opened by the opening and closing mechanism (not shown). As a result, the B-axis rotary tool body 33 and the housing 41 move from the state shown in FIG. 6A to the state shown in FIG. 6B.

Next, the control unit 56 moves the B-axis rotary tool device 3 vertically (step S3). More specifically, as shown in FIG. 6B, the instruction unit 561 of the control unit 56 controls the first servo motor MT1 to lower the B-axis rotary tool body 33 in the direction of arrow α₂. By lowering the B-axis rotary tool body 33, the second tool 32 supported by the B-axis rotary tool body 33 is temporarily held by the two hooks H14 of the tool holder H1, which is vacant.

Before the descent of the B-axis rotary tool body 33, the instruction unit 561 of the control unit 56 controls the second servo motor MT2 to rotate the magazine 42 so that the vacant tool holder H1 is placed just under the second tool 32. From the descent of the B-axis rotary tool body 33 until the start of the next step, the instruction unit 561 further controls the second servo motor MT2 to keep the magazine 42 at a predetermined position so that the magazine does not rotate.

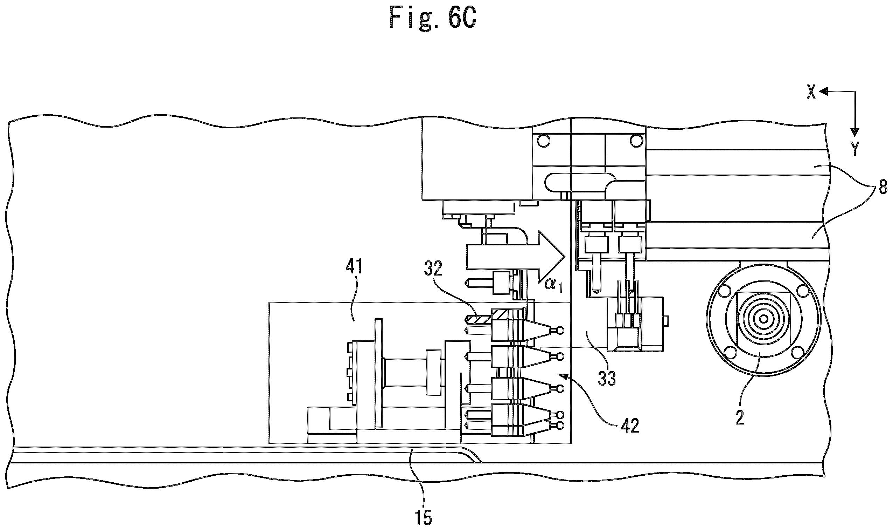

Next, the control unit 56 makes the tool unclamped (step S4). More specifically, the instruction unit 561 of the control unit 56 controls a tool holding mechanism (not shown) in the B-axis rotary tool body 33 that holds the second tool 32, thereby releasing the second tool 32. In addition, the instruction unit 561 of the control unit 56 controls the third servo motor MT3 to move the B-axis rotary tool body 33 slightly in the direction of arrow α₁ (forward direction) while the second tool 32 is temporarily held by the tool holder H1. As a result, the B-axis rotary tool body 33 pushes the magazine 42 via the second tool 32, which is removed from the B-axis rotary tool body 33 to be completely held by the tool holder H1. In other words, transfer of the second tool 32 from the B-axis rotary tool device 3 to the ATC 4 is finished by step S4. This state is shown in FIG. 6C.

The magazine 42 applies a load when being pushed by the B-axis rotary tool body 33. Thus the current value supplied from the motion controller C3 to the third servo motor MT3 controlled to move the B-axis rotary tool body 33 in the direction of arrow α₁ differs from when the magazine 42 does not apply a load.

The instruction unit 561 of the control unit 56 controls the fourth servo motor MT4 to keep the housing 41 at the predetermined position (position shown in FIG. 6C). However, the magazine 42 is pushed by the B-axis rotary tool body 33 via the second tool 32, and thus, to keep the housing 41 at the predetermined position, the current value outputted from the motion controller C4 to the fourth servo motor MT4 differs from when the housing 41 is not pushed.

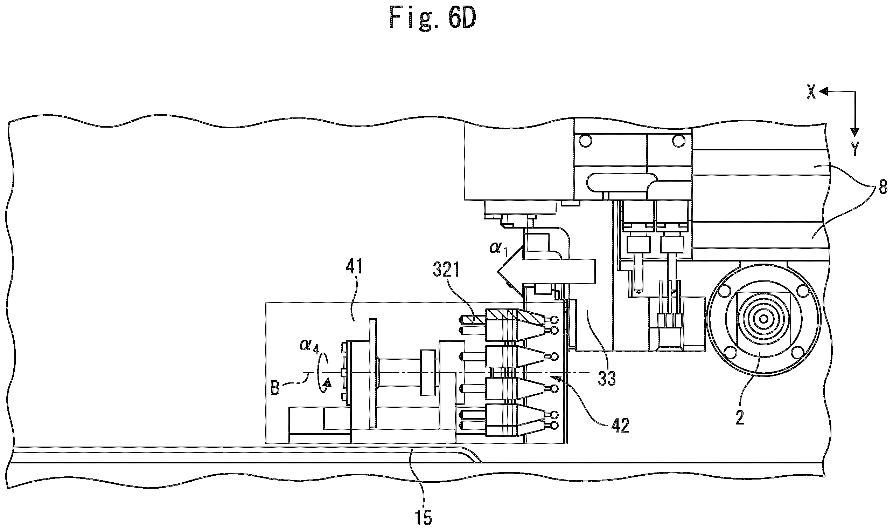

Next, the control unit 56 moves the B-axis rotary tool device 3 horizontally (step S5). More specifically, as shown in FIG. 6C, the instruction unit 561 of the control unit 56 controls the third servo motor MT3 to move the B-axis rotary tool body 33 in the direction of arrow α₁ (backward direction). As a result, the B-axis rotary tool body 33 moves from the state shown in FIG. 6C to the state shown in FIG. 6D.

Next, the control unit 56 makes the next tool prepared (step S6). More specifically, the instruction unit 561 controls the second servo motor MT2 to rotate the magazine 42 in the direction of arrow α₄ around the rotating shaft B so that a tool holder Hn holding the tool to be used next (next tool 321) comes to the top. This state is shown in FIG. 6D.

Next, the control unit 56 moves the B-axis rotary tool device 3 horizontally (step S7). More specifically, as shown in FIG. 6D, the instruction unit 561 of the control unit 56 controls the third servo motor MT3 to move the B-axis rotary tool body 33 in the direction of arrow α₁ (forward direction).

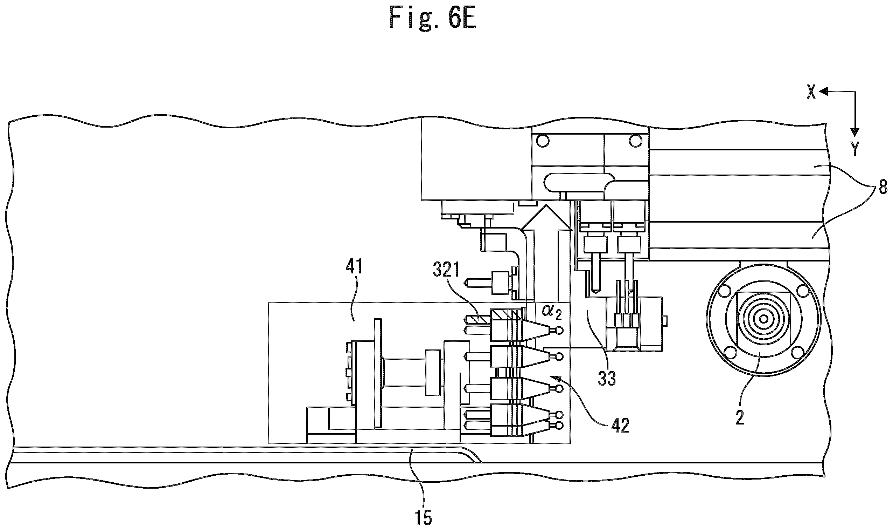

Next, the control unit 56 makes the next tool clamped (step S8). More specifically, while controlling the third servo motor MT3 to move the B-axis rotary tool body 33 slightly in the direction of arrow α₁ (forward direction), the instruction unit 561 of the control unit 56 controls the tool holding mechanism in the B-axis rotary tool body 33 to hold the next tool 321. In other words, transfer of the next tool 321 from the ATC 4 to the B-axis rotary tool device 3 is finished by step S8. This state is shown in FIG. 6E.

When the next tool 321 is held in step S8, this hold results in the B-axis rotary tool body 33 pushing the magazine 42 via the next tool 321. Thus the current value supplied from the motion controller C3 to the third servo motor MT3 controlled to move the B-axis rotary tool body 33 in the direction of arrow α₁ is higher than when the magazine 42 does not apply a load. Similarly, the magazine 42 is pushed by the B-axis rotary tool body 33 via the next tool 321, and thus, to keep the housing 41 at the predetermined position, the current value outputted from the motion controller C4 to the fourth servo motor MT4 is higher than when the housing 41 is not pushed.

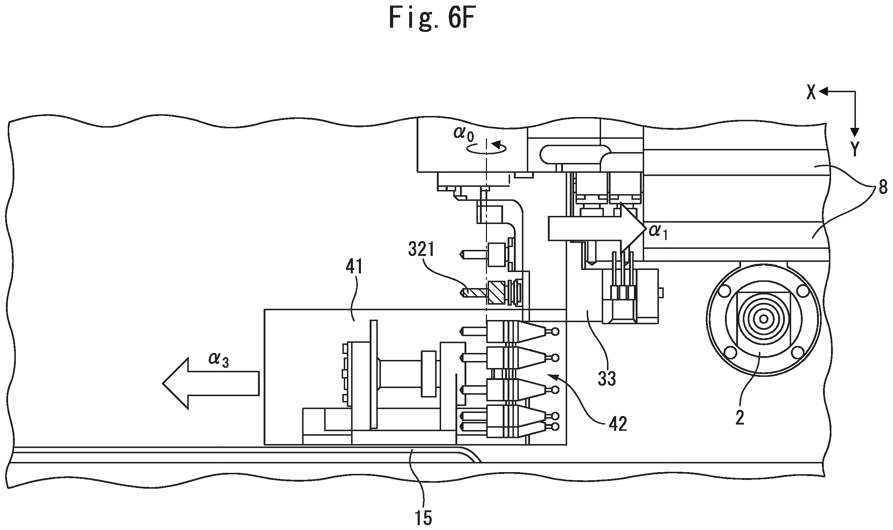

Next, the control unit 56 moves the B-axis rotary tool device 3 vertically (step S9). As shown in FIG. 6E, the instruction unit 561 of the control unit 56 controls the first servo motor MT1 to raise the B-axis rotary tool body 33 in the direction of arrow α₂. As a result, the B-axis rotary tool body 33 moves from the state shown in FIG. 6E to the state shown in FIG. 6F. In this state, the next tool 321 is removed from the magazine 42. From the ascent of the B-axis rotary tool body 33 until the start of the next step, the instruction unit 561 of the control unit 56 further controls the second servo motor MT2 to keep the magazine 42 at the predetermined position so that the magazine does not rotate.

Next, the control unit 56 moves the B-axis rotary tool device 3 and the ATC 4 horizontally (step S10). More specifically, as shown in FIG. 6F, the instruction unit 561 of the control unit 56 controls the third servo motor MT3 to move the B-axis rotary tool body 33 in the direction of arrow α₁ (backward direction). Simultaneously, the instruction unit 561 of the control unit 56 controls the fourth servo motor MT4 to move the housing 41 in the direction of arrow α₃ (backward direction). At this time, the shutter 46 of the housing 41 is closed by the opening and closing mechanism (not shown).

Finally, the control unit 56 turns the B-axis rotary tool device (step S11) and terminates the series of tool exchanging steps. More specifically, the instruction unit 561 of the control unit 56 controls the turning motor MT5 to turn the B-axis rotary tool body 33 by 180 degrees in the direction of arrow α₀ shown in FIG. 6F around the pivot A of the turning motor MT5. Simultaneously, the instruction unit 561 of the control unit 56 controls the third servo motor MT3 to move the B-axis rotary tool body 33 in the direction of arrow α₁ shown in FIG. 6F (backward direction). As a result, the B-axis rotary tool body 33 moves from the state shown in FIG. 6F to the state shown in FIG. 6A state again.

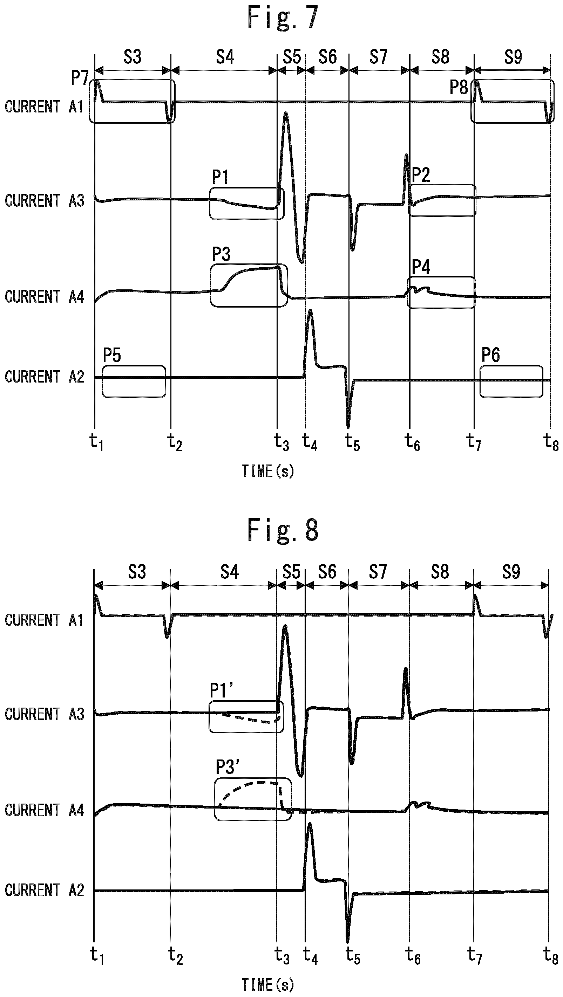

FIG. 7 shows normal waveforms of currents supplied to the servo motors in the series of tool exchanging steps. In FIG. 7, the abscissa represents time (time t₁ to t₈) (s), the ordinate represents current values (mA), and S3 to S9 indicate periods corresponding to the series of tool exchanging steps shown in FIG. 5. Current A1 is the waveform of a current supplied from the motion controller C1 to the first servo motor MT1. Current A2 is the waveform of a current supplied from the motion controller C2 to the second servo motor MT2. Current A3 is the waveform of a current supplied from the motion controller C3 to the third servo motor MT3. Current A4 is the waveform of a current supplied from the motion controller C4 the fourth servo motor MT4. The same holds true for FIGs. 8 to 10.

In the period of current A3 denoted by P1 in FIG. 7, when the B-axis rotary tool body 33 pushes the magazine 42, the load caused by the magazine 42 varies the current value supplied from the motion controller C3 to the third servo motor MT3, as described in relation to step S4 of FIG. 5. In the period of current A3 denoted by P2 in FIG. 7, when the B-axis rotary tool body 33 pushes the magazine 42, the load caused by the magazine 42 varies the current value supplied from the motion controller C3 to the third servo motor MT3, as described in relation to step S8 of FIG. 5.

In the period of current A4 denoted by P3 in FIG. 7, when the B-axis rotary tool body 33 pushes the magazine 42, the current value supplied from the motion controller C4 to the fourth servo motor MT4 varies to keep the position of the housing 41 against the push by the B-axis rotary tool body 33, as described in relation to step S4 of FIG. 5. In the period of current A4 denoted by P4 in FIG. 7, when the B-axis rotary tool body 33 pushes the magazine 42, the current value supplied from the motion controller C4 to the fourth servo motor MT4 varies to keep the position of the housing 41 against the push by the B-axis rotary tool body, as described in relation to step S8 of FIG. 5.

In the period of current A2 denoted by P5 in FIG. 7, since no event that moves the magazine 42 occurs during normal operation in step S3 of FIG. 5, the current value supplied from the motion controller C2 to the second servo motor MT2 does not vary. In the period of current A2 denoted by P6 in FIG. 7, since no event that moves the magazine 42 occurs during normal operation in step S9 of FIG. 5, the current value supplied from the motion controller C2 to the second servo motor MT2 does not vary.

In the period of current A1 denoted by P7 in FIG. 7, since the B-axis rotary tool body 33 is lowered, the current value supplied from the motion controller C1 to the first servo motor MT1 varies, as described in relation to normal operation in step S3 of FIG. 5. In the period of current A1 denoted by P8 in FIG. 7, since the B-axis rotary tool body 33 is raised, the current value supplied from the motion controller C1 to the first servo motor MT1 varies, as described in relation to normal operation in step S9 of FIG. 5.

FIG. 8 shows the waveforms of currents supplied to the servo motors in a predetermined tool exchanging step (see step S4 of FIG. 5) for the case where tool unclamping is abnormal.

For example, when the B-axis rotary tool body 33 is not holding the second tool 32, the B-axis rotary tool body 33 does not push the magazine 42 during operation in step S4 of FIG. 5. Thus, in the period of current A3 denoted by P 1' in FIG. 8, since the magazine 42 does not apply a load, the current value supplied from the motion controller C3 to the third servo motor MT3 does not vary. Similarly, in the period of current A3 denoted by P3' in FIG. 8, since the B-axis rotary tool body 33 does not push the magazine 42, the current value supplied from the motion controller C4 to the fourth servo motor MT4 does not vary. In P 1' and P3' of FIG. 8, the waveforms of currents A3 and A4 for the case of normal operation are indicated by dashed lines.

As shown in FIG. 8, an abnormality at tool unclamping can be detected by comparing the current waveforms for the case of normal operation (see FIG. 7) with those for the case of abnormal operation (see FIG. 8). More specifically, the storage 52 prestores current waveforms for the case of normal operation like those shown in FIG. 7. After the start of the tool exchanging steps, the current detector 55 detects the current value supplied to the third servo motor MT3 and/or the current value supplied to the fourth servo motor MT4, and the determination unit 562 of the control unit 56 determines that an abnormality has occurred, when predetermined current variations do not occur during the period between times t₂ and t₃ corresponding to step S4.

As described above, an abnormal occurrence is not necessarily limited to the case where a current value supplied to a servo motor exceeds an allowable value. Thus the machine tool 1 according to the present embodiment can detect an abnormality that occurs internally in the step of tool unclamping even when the current values of the motors are less than an allowable value.

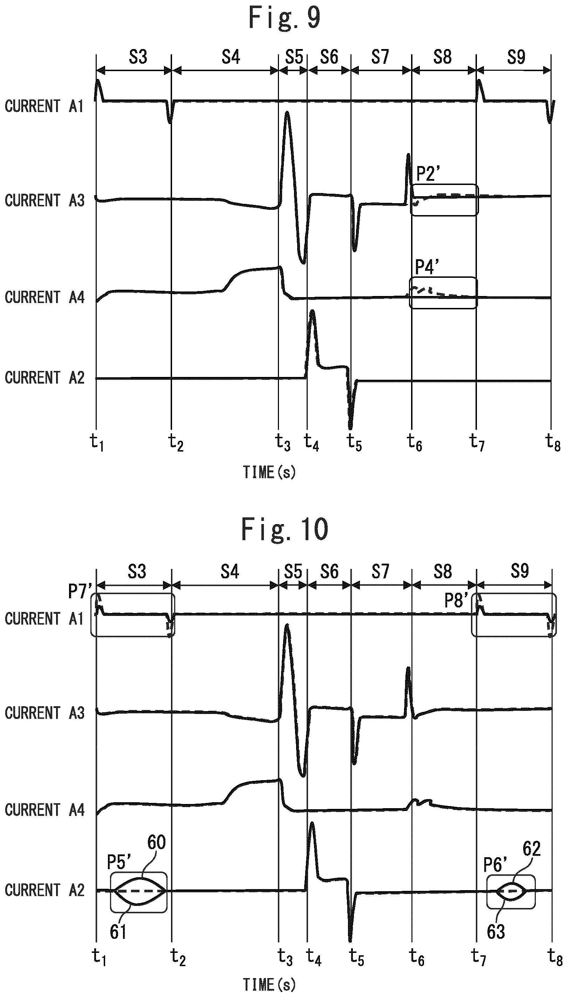

FIG. 9 shows the waveforms of currents supplied to the servo motors in a predetermined tool exchanging step (see step S8 of FIG. 5) for the case where next-tool clamping is abnormal.

For example, when the B-axis rotary tool body 33 is not holding the next tool 321, the B-axis rotary tool body 33 does not push the magazine 42 during operation in step S8 of FIG. 5. Thus, in the period of current A3 denoted by P2' in FIG. 9, since the magazine 42 does not apply a load, the current value supplied from the motion controller C3 to the third servo motor MT3 does not vary. Similarly, in the period of current A3 denoted by P4' in FIG. 9, since the B-axis rotary tool body 33 does not push the magazine 42, the current value supplied from the motion controller C4 to the fourth servo motor MT4 does not vary. In P2' and P4' of FIG. 9, the waveforms of currents A3 and A4 for the case of normal operation are indicated by dashed lines.

As shown in FIG. 9, an abnormality at next-tool unclamping can be detected by comparing the current waveforms for the case of normal operation (see FIG. 7) with those for the case of abnormal operation (see FIG. 9). More specifically, the storage 52 prestores current waveforms for the case of normal operation like those shown in FIG. 7. After the start of the tool exchanging steps, the current detector 55 detects the current value supplied to the third servo motor MT3 and/or the current value supplied to the fourth servo motor MT4, and the determination unit 562 of the control unit 56 determines that an abnormality has occurred, when predetermined current variations do not occur during the period between times t₆ and t₇ corresponding to step S8.

As described above, an abnormal occurrence is not necessarily limited to the case where a current value supplied to a servo motor exceeds an allowable value. Thus the machine tool 1 according to the present embodiment can detect an abnormality that occurs internally in the step of next-tool unclamping even when the current values of the motors are less than an allowable value.

FIG. 10 shows the waveforms of currents supplied to the servo motors in predetermined tool exchanging steps (see steps S3 and S9 in FIG. 5) for the case where the magazine 42 is broken.

As described with reference to FIGs. 4A and 4B, a tool is housed in one of the tool holders H1 to H12 on the magazine 42 that each include two hooks H14. When a tool is inserted into a tool holder (step S3) and when a tool is removed from a tool holder (step S9), the instruction unit 561 of the control unit 56 instructs the motion controller C2 to control the second servo motor MT2, thereby keeping the magazine 42 at the predetermined position.

For example, one of the two hooks H14 may be broken for some reason. In such a case, an attempt to insert a tool into a tool holder or to remove a tool from a tool holder results in application of a load that rotates the magazine 42 leftward or rightward. Application of a load results in the motion controller C2 varying the current value supplied to the second servo motor MT2 to execute control so that the magazine 42 is kept at the predetermined position.

When a tool is inserted into a tool holder (step S3) in the period of current A2 denoted by P5' in FIG. 10, if the left hook H14 of the two hooks H14 shown in FIG. 4A is broken, the motion controller C2 increases the current value supplied to the second servo motor MT2, as indicated by a current waveform 60 in FIG. 10, to restrain the magazine 42 from rotating in the direction toward the broken hook H14. If the right hook H14 of the two hooks H14 shown in FIG. 4A is broken, the motion controller C2 decreases the current value supplied to the second servo motor MT2, as indicated by a current waveform 61 in FIG. 10, to restrain the magazine 42 from rotating in the direction toward the broken hook H14. In P5 of FIG. 10, the waveform of current A2 for the case of normal operation is indicated by a dashed line.

When a tool is removed from a tool holder (step S9) in the period of current A2 denoted by P6' in FIG. 10, if the left hook H14 of the two hooks H14 shown in FIG. 4A is broken, the motion controller C2 increases the current value supplied to the second servo motor MT2, as indicated by a current waveform 62 in FIG. 10, to restrain the magazine 42 from rotating in the direction toward the broken hook H14. If the right hook H14 of the two hooks H14 shown in FIG. 4A is broken, the motion controller C2 decreases the current value supplied to the second servo motor MT2, as indicated by a current waveform 63 in FIG. 10, to restrain the magazine 42 from rotating in the direction toward the broken hook H14. In P6' of FIG. 10, the waveform of current A2 for the case of normal operation is indicated by a dashed line.

The instruction unit 561 of the control unit 56 instructs the motion controller C1 to control the first servo motor MT1, thereby lowering and raising the B-axis rotary tool body 33. For example, when one of the two hooks H14 is broken, elastic resistance of the hook H14 in attempts to lower and raise the B-axis rotary tool body 33 is smaller than when the hook is not broken, and so is a load applied to the first servo motor MT1. A smaller load results in the motion controller C1 executing control to vary the current value supplied to the first servo motor MT1 smaller than usual.

When a tool is inserted into a tool holder (step S3) in the period of current A1 denoted by P7' in FIG. 10, elastic resistance of the hook H14 is smaller, and thus variations in the current value supplied from the motion controller C1 to the first servo motor MT1 are smaller. In P7' of FIG. 10, the waveform of current A1 for the case of normal operation is indicated by a dashed line.

When a tool is removed from a tool holder (step S9) in the period of current A1 denoted by P8' in FIG. 10, elastic resistance of the hook H14 is smaller, and thus variations in the current value supplied from the motion controller C1 to the first servo motor MT1 are smaller. In P8' of FIG. 10, the waveform of current A1 for the case of normal operation is indicated by a dashed line.

As shown in FIG. 10, an abnormality caused by breakage of the magazine 42 can be detected by comparing the current waveforms for the case of normal operation (see FIG. 7) with those for the case of abnormal operation (see FIG. 10). More specifically, the storage 52 prestores current waveforms for the case of normal operation like those shown in FIG. 7. After the start of the tool exchanging steps, the current detector 55 detects the values of currents A1 and A2 supplied to the first servo motor MT1 and the second servo motor MT2, respectively, and the determination unit 562 of the control unit 56 determines that an abnormality has occurred, when predetermined current variations occur during the period between times t₁ and t₂ corresponding to step S3 and/or the period between times t₇ and t₈ corresponding to step S9. Thus, when an events occur in which the same abnormality changes the waveforms of current values to different waveforms simultaneously, abnormality determination can be made more accurately by comparing time-varying changes in the current values with normal values.

As described above in detail, the machine tool 1 according to the present embodiment can determine the presence or absence of at least an abnormality at tool unclamping, an abnormality at next-tool clamping, and/or an abnormality caused by breakage of the magazine 42, by detecting current values supplied to related servo motors.

In the machine tool 1 according to the present embodiment, the actual amounts of rotation and the actual numbers of revolutions of the servo motors MT1 to MT4 and the turning motor MT5 detected by sensors Se1 to Se5 may also be transmitted to the NC device 5.

In the machine tool 1 according to the present embodiment, the storage 52 may prestore at least time-varying changes in current values inputted into the first servo motor MT1 and the second servo motor MT2 for the case where the series of tool exchanging steps is performed normally.

In the machine tool 1 according to the present embodiment, multiple first servo motors MT1 may be installed and controlled by the motion controller C1, and the B-axis rotary tool device 3 may use the first servo motors MT1 to operate the vertical-direction moving mechanism M1. Since the same holds true for the other motion controllers C2 to C5, the other servo motors MT2 to MT5, and the other mechanisms M2 to M5, detailed description thereof is omitted.

In step S1, the control unit 56 turns the B-axis rotary tool device by separate steps of moving the B-axis rotary tool body 33 along the rails 8 in the direction of arrow α₁ (forward direction) and turning the B-axis rotary tool body 33 by 180 degrees in the direction of arrow α₀ around the pivot A of the turning motor MT5. However, in step S1, the control unit 56 may control the third servo motor MT3 to move the B-axis rotary tool body 33 in the direction of arrow α₁ (forward direction), and simultaneously turn the B-axis rotary tool body 33 by 180 degrees in the direction of arrow α₀ around the pivot A of the turning motor MT5, as in step S11.

In the machine tool 1 according to the present embodiment, the tool holders H1 to H12 include two hooks H14 including an elastic member for grasping a tool T, as shown in FIGs. 4A to 4C. However, in the machine tool 1 according to the present embodiment, the hooks of the tool holders H1 to H12 may be configured as a single object.

While the embodiment has been described above, all the examples and conditions herein have been described for the purpose of helping to understand the invention and the concepts thereof to be applied to a technique. In particular, the described examples and conditions are not intended to limit the scope of the invention, and the configurations of such examples in the description do not illustrate the advantages or disadvantages of the invention. Although the embodiment of the invention has been described in detail, it should be understood that various changes, substitutions, and modifications can be made without departing from the spirit and scope of the invention.

## Claims

1. A machine tool comprising a rotary tool device and an automatic tool changer that exchanges tools with the rotary tool device,
the rotary tool device comprising:
(i) a rotary tool body that holds the tool rotatably to machine a workpiece; and
(ii) a first servo motor that generates motive power for operating the rotary tool device,
the automatic tool changer comprises a second servo motor that generates motive power for operating the automatic tool changer,
the machine tool comprising:
a current detector that detects a plurality of current values inputted into the first servo motor and the second servo motor;
a storage that stores normal time-varying changes in current values inputted into the first servo motor and the second servo motor in a predetermined step among a series of tool exchanging steps performed between the rotary tool device and the automatic tool changer; and
a determination unit that determines whether the predetermined step is performed normally by comparing the plurality of current values detected by the current detector in the predetermined step with the normal time-varying changes in current values.

2. The machine tool according to claim 1, wherein the automatic tool changer further comprises a housing and a round magazine that is housed in the housing and that has tool holders arranged circumferentially, the tool holders holding the tools.

3. The machine tool according to claim 2, wherein
the first servo motor generates motive power for operating a vertical-direction moving mechanism that enables the rotary tool body to move along the vertical direction,
the second servo motor generates motive power for operating a magazine rotating mechanism that enables the magazine to rotate about a rotating shaft, and
the predetermined step is a step in which the tools are moved to a predetermined position where the tools are exchanged between the rotary tool device and the automatic tool changer or a step in which the rotary tool device and the automatic tool changer are moved from the predetermined position to original positions where the rotary tool device and the automatic tool changer are located before starting the series of tool exchanging steps.

4. The machine tool according to claim 3, wherein
the magazine comprises a hook for holding a tool, and
the determination unit determines whether the hook is broken, based on a current value inputted into the second servo motor detected by the current detector.

5. The machine tool according to any one of claims 2 to 4, wherein
the rotary tool device comprises a third servo motor that generates motive power for operating a first horizontal-direction moving mechanism that enables the rotary tool body to move along the horizontal direction,
the current detector detects a current value inputted into the third servo motor, and
when the current value detected by the current detector does not vary in a second predetermined step among the series of tool exchanging steps performed between the rotary tool device and the automatic tool changer, the determination unit determines that the second predetermined step is not performed normally.

6. The machine tool according to any one of claims 2 to 5, wherein
the automatic tool changer comprises a fourth servo motor that generates motive power for operating a second horizontal-direction moving mechanism that enables the housing to move along the horizontal direction,
the current detector detects a current value inputted into the fourth servo motor, and
when the current value detected by the current detector does not vary in a second predetermined step among the series of tool exchanging steps performed between the rotary tool device and the automatic tool changer, the determination unit determines that the second predetermined step is not performed normally.

7. The machine tool according to claim 5 or 6, wherein
the second predetermined step is a step in which the tool is transferred from the rotary tool device to the automatic tool changer or a step in which the tool is transferred from the automatic tool changer to the rotary tool device.
